# EUROPEAN PATENT APPLICATION

(11) **EP 2 548 780 A2**
(43) Date of publication of application: **23.01.2013**
(21) Application number: 12176882.4
(22) Date of filing: 18.07.2012
(51) Int. Cl.: B60W 20/00, B60W 30/19, B60W 10/08, B60W 10/11, F16H 61/04

(54) **Power transmission control device for vehicle**

(30) Priority: 19.07.2011 JP 2011157685
(71) Applicant: Aisin AI Co., Ltd., Nishio-shi, Aichi 445-0006 (JP)
(72) Inventor: Ito, Yoshiki, Nishio-shi, 445-0006 (JP); Miyazaki, Takeshige, Nishio-shi, Aichi 445-0006 (JP)
(74) Representative: Ettmayr, Andreas

(57) **Abstract**

Provided is a power transmission control device applied to an hybrid vehicle with manual transmission (HV-MT), capable of providing an appropriate shift feeling in various conditions. The power transmission control device is applied to a hybrid-vehicle provided with an internal combustion engine (E/G) and a motor (M/G) as power sources, and includes a manual transmission (M/T) and a friction clutch (C/T). An output shaft of the motor is connected to an input shaft of the manual transmission. Based on determination that the friction clutch is in a disengaged state and a driver is carrying out a gear shift operation, a torque (MG torque) of the motor for rotationally driving the input shaft of the manual transmission is adjusted. As a result, during the gear change operation, particularly, during a synchronization action, in order to rotationally drive the input shaft of the manual transmission, the MG torque of an arbitrary magnitude can be provided for the input shaft thereof. Thus, based on various conditions, a "shift impulse" during the synchronization action can be actively adjusted.

## Description

### BACKGROUND OF THE INVENTION

### 1. Field of the Invention

The present invention relates to a power transmission control device for a vehicle, and more particularly, to a power transmission control device applied to a vehicle provided with an internal combustion engine and a motor as power sources, the power transmission control device including a clutch between the internal combustion engine and a transmission.

### 2. Description of the Related Art

Conventionally, a so-called hybrid vehicle provided with an internal combustion engine and an electric motor (an electric motor and an electric power generator) as power sources is widely known (for example, refer to Japanese Patent Application Laid-open No. 2000-224710). In recent years, a vehicle (hereinafter, referred to as "HV-MT vehicle"), which is a hybrid vehicle and is provided with a manual transmission and a friction clutch, has been under development. In this context, "manual transmission" is a transmission (so-called MT) without a torque converter, in which a gear position is selected based on a shift position of a shift lever operated by a driver. Moreover, the "friction clutch" is a clutch interposed between an output shaft of an internal combustion engine and an input shaft of a manual transmission, and an engaged state of the friction plate changes based on an operation amount of the clutch pedal operated by the driver. In the following section, a torque of the output shaft of the internal combustion engine is referred to as "Internal-combustion-engine toque", and a torque of the output shaft of the electric motor is referred to as "electric-motor torque".

On the HV-MT vehicle, a configuration of connecting the output shaft of the electric motor to any one of the output shaft of the internal combustion engine, the input shaft of the transmission, and the output shaft of the transmission may be employed. In the following section, a configuration in which the output shaft of the electric motor is connected to the input shaft of the transmission is considered.

In general, on the HV-MT vehicle, the gear change operation by the driver is carried out, in a state in which the friction olutch is disengaged by an operation on a clutch pedal, by an operation on a shift lever changing a gear position of the transmission. When the gear position of the transmission is changed, roughly, the transmission transitions from a meshing state in which a gear position before a gear change is realized to a neutral state (a state in which a power transmission system is not realized between the input/output shafts), and then, via a "synchronization action", to a meshing state in which a gear position after the gear change is realized.

On this occasion, the "synchronization action" is an action for matching a rotation speed of the input shaft of the transmission with a rotation speed (hereinafter, referred to as "rotation speed corresponding to vehicle-speed-after-gear-change") of the input shaft of the transmission, which is obtained from the speed reduction ratio of the transmission corresponding to the gear position after the gear change and the vehicle speed. In general, the synchronization action can be smoothly achieved by a known, so-called synchronization mechanism. As a result, a product (hereinafter, referred to as "shift impulse") of an operation force for the shift lever during the synchronization action and a duration of the synchronization action is appropriately adjusted, resulting in a satisfactory shift feeling.

By the way, in a case where the HV-MT vehicle employs the configuration in which the output shaft of the electric motor is connected to the input shaft of the transmission, a substantial rotational moment of inertia of the input shaft of the transmission is increased by this configuration. As a result, there may arise a concern that the "shift impulse" during the synchronization action increases, resulting in deterioration of the shift feeling.

However, this configuration can provide the input shaft of the transmission during the synchronization action with an arbitrary magnitude of the electric-motor torque. In other words, by adjusting the electric-motor torque, the "shift impulse" during the synchronization action can be adjusted. Thus, depending on various conditions, a "shift impulse" during the synchronization action can be actively adjusted. As a result, not only the above-mentioned concern can be resolved but also it is expected that an appropriate shift feeling can be provided in various conditions.

### SUMMARY OF THE INVENTION

In view of the above-mentioned situation, it is an object of the present invention to provide a power transmission control device intended for an HV-MT vehicle, which is capable of providing an appropriate shift feeling in various conditions.

A power transmission control device for a vehicle according to the present invention is applied to a vehicle having an internal combustion engine and an electric motor as power sources. The power transmission control device includes a transmission, a friction clutch, and control means.

The transmission is a manual transmission without a torque converter, in which one of a plurality of gear positions is selected based on a shift position of a shift operation member operated by a driver. The transmission includes an input shaft for receiving an input of a power from an output shaft of the internal combustion engine, and an output shaft for outputting a power to drive wheels of the vehicle. The electric motor has an output shaft connected to the input shaft of the transmission.

The friction clutch is interposed between the output shaft of the internal combustion engine and the input shaft of the transmission for selectively realizing an engaged state, which is a state in which the power is transmitted, and a disengaged state, which is a state, in which the power is not transmitted, based on an operation on a clutch operation member operated by the driver.

The control means controls a torque of the output shaft of the internal combustion engine (internal-combustion-engine torque) and a torque of the output shaft of the electric motor (electric-motor torque).

The power transmission control device for a vehicle according to the present Invention has a feature that the control means Includes adjustment means for adjusting, based on determination from the detected operation on the clutch operation member that the friction clutch is in the disengaged state, and on determination from the detected operation on the shift operation member that the driver is carrying out a gear change operation, the electric-motor torque in order to rotationally drive the input shaft of the transmission. On this occasion, it is preferred that the adjustment means be configured to adjust the electric-motor torque based on a condition that the transmission is in a neutral state (state in which a power transmission system is not realized between the input and output shafts).

In this way, this configuration can provide the input shaft of the transmission during the gear change operation (particularly, synchronization action) with an arbitrary magnitude of the electric-motor torque in order to rotationally drive the input shaft of the transmission. Thus, depending on various conditions, a "shift impulse" during the synchronization action can be actively adjusted. As a result, an appropriate shift feeling can be provided in various conditions. Note that, a description is later given of a specific method of adjusting the "shift impulse" by the electric-motor torque in various conditions.

### BRIEF DESCRIPTION OF THE DRAWINGS

FIG. 1 is a schematic configuration diagram of an HV-MT vehicle equipped with a power transmission control device according to an embodiment of the present invention.
FIG. 2 is a diagram illustrating an example of a shift pattern of a transmission illustrated in FIG. 1.
FIG. 3 is a graph illustrating a map which is referred by the power transmission control device illustrated in FIG. 1, and which defines a relationship between a clutch return stroke and a clutch torque.
FIG. 4 is a time chart illustrating an example of an action in a case where a "shift impulse" is adjusted by means of an MG torque during the gear change operation by the power transmission control device illustrated in FIG. 1.
FIG. 5 is a time chart illustrating another example of the action in the case where the "shift impulse" is adjusted by means of the MG torque during the gear change operation by the power transmission control device illustrated in FIG. 1.

### DETAILED DESCRIPTION OF THE PREFERRED EMBODIMENT

A description is now given of an embodiment of a power transmission control device for a vehicle according to the present invention, referring to the drawings.

### (Configuration)

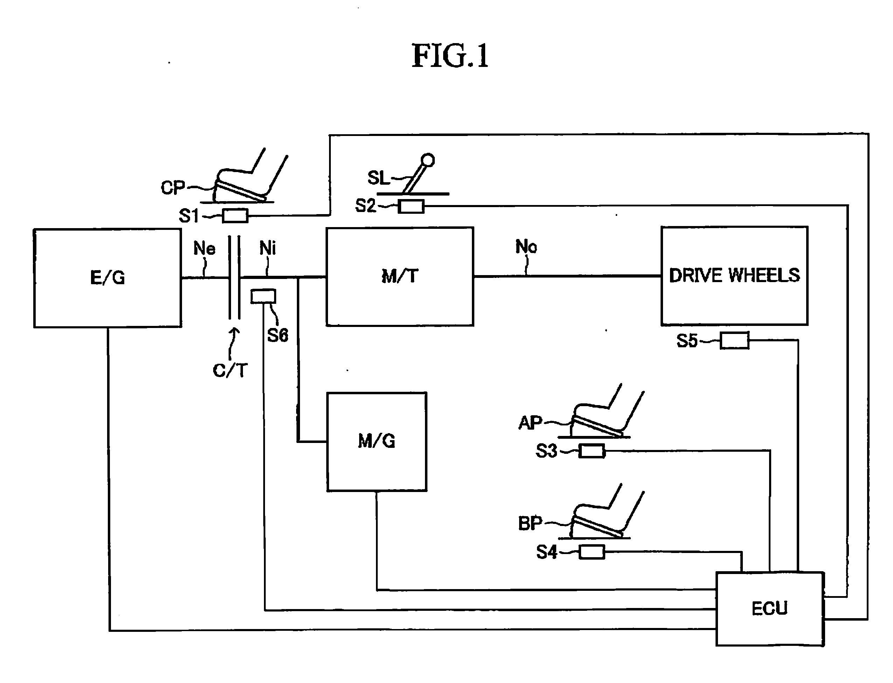

FIG. 1 illustrates a schematic configuration of a vehicle equipped with a power transmission control device (hereinafter, referred to as "this device") according to an embodiment of the present invention. This vehicle is a hybrid vehicle provided with an engine E/G and a motor/generator M/G as power sources, and also provided with a manual transmission M/T without a torque converter, and a friction clutch C/T. In other words, this vehicle is the above-mentioned HV-MT vehicle.

The engine E/G is a known internal combustion engine, and is, for example, a gasoline engine using gasoline as a fuel or a diesel engine using light oil as a fuel.

The manual transmission M/T is a transmission without a torque converter, in which a gear position Is selected based on a shift position of a shift lever SL operated by the driver. The M/T includes an input shaft for receiving an input of a power from the output shaft of the E/G, and an output shaft for outputting a power to drive wheels of the vehicle.

The gear positions of the M/T may be mechanically selected/changed by using a link mechanism or the like, which mechanically couples the shift lever SL and a sleeve (not shown) inside the M/T. based on the shift position of the shift lever SL, or may be selected/changed electrically (by means of the so-called by-wire method) by using a driving force of an actuator which operates based on a detection result by a sensor (sensor S2 described later) for detecting the shift position of the shift lever SL.

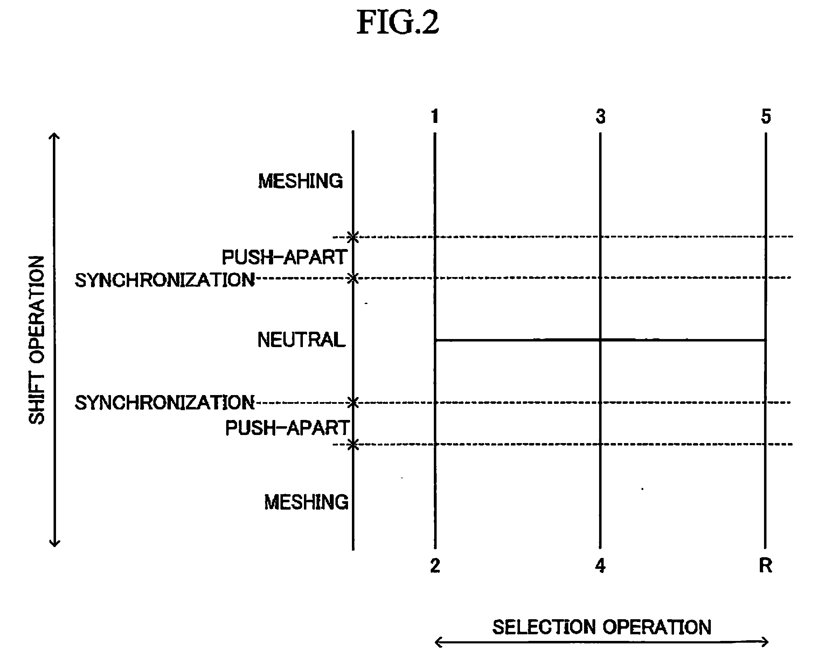

The M/T includes, for example, five forward gear positions (first to fifth) and one reverse gear position (R). FIG. 2 illustrates an example of a shift pattern of the shift lever SL in this case. An additional description is now given of positions in a shift operation direction (vertical direction in FIG. 2) illustrated in FIG. 2 of the shift lever SL.

In a "neutral" area, the transmission is in a neutral state. The neutral state refers to a state in which "the sleeve provided so as to axially move relative to the input shaft or the output shaft of the transmission based on the movement of the shift lever SL, and so as to integrally rotate with the input shaft or the output shaft of the transmission"(not shown) and "a free-rotation gear which is rotatable relative to the input shaft or the output shaft of the transmission, unable to move axially relative to the input shaft or the output shaft of the transmission, and able to coaxially mesh with the sleeve" (not shown) do not mesh with each other, namely, a state in which a power transmission system is not realized between the input shaft and the output shaft of the transmission.

In the "meshing" area, the transmission is in a meshing state. The meshing state refers to a state in which the sleeve and the free-rotation gear mesh with each other, namely, a state in which the power transmission system is realized between the input shaft and the output shaft of the transmission.

In the "push-apart" area, a "push-apart action" is carried out. The "push-apart" action is an action carried out in a course of transition from the "neutral" area to the "meshing" area. Specifically, the "push-apart" action is an action of completely matching the phase of a spline of the sleeve and the phase of teeth of the free-rotation gear by, while "a tapered portion formed on an axial end on a free-rotation gear side of the spline of the sleeve" and "a tapered portion formed on an axial end on a sleeve side of the teeth of the free-rotation gear" are engaging with each other, the sleeve axially approaching the free-rotation gear in a gradual manner.

In order to move the position in the shift operation direction of the shift lever SL from the "neutral" area to the "push-apart" area, it is necessary to carry out a "synchronization action" for matching the rotation speed of the sleeve and the rotation speed of the free-rotation gear with each other. In other words, the "synchronization action" is an action for matching the rotation speed of the input shaft of the transmission with "the rotation speed of the input shaft of the transmission, which is obtained from the speed reduction ratio of the transmission corresponding to the gear position after the gear change and the vehicle speed" (hereinafter, referred to as "rotation speed corresponding to vehicle-speed-after-gear-change"). The "synchronization action" is carried out in a state in which the position in the shift operation direction of the shift lever SL is maintained in a "position corresponding to a boundary between the neutral area and the push-apart area".

The "synchronization action" can be smoothly achieved by the known, so-called synchronization mechanism (not shown). As a result, a product (hereinafter, referred to as "shift impulse") of an operation force of the shift lever SL during the synchronization action and a duration of the synchronization action is appropriately adjusted, resulting in a satisfactory shift feeling.

The friction clutch C/T is interposed between the output shaft of the E/G and the input shaft of the M/T. The C/T is a known clutch having an engaged state of a friction plate (more specifically, with respect to a flywheel integrally rotating with the output shaft of the E/G, a relative position in the axial direction of the friction plate integrally rotating with the input shaft of the M/T), which changes based on an operation amount (depressed amount) of a clutch pedal CP operated by the driver.

The engaged state Includes a fully engaged state, a partially engaged state, and fully disengaged state. The fully engaged state refers to a state of transmitting the power without a slip. The partially engaged state refers to a state of transmitting the power with a slip. The fully disengaged state refers to a state of not transmitting the power. In the following section, from a fully depressed state of the clutch pedal CP. an operation amount in a returning direction of the clutch pedal CP is referred to as "clutch return stroke".

The clutch return stroke is "0" in a state in which the clutch pedal CP is fully depressed, and takes the maximum value in a state in which the clutch pedal CP is released (is not operated). As the clutch return stroke increases from "0", the C/T transitions from the fully disengaged state, via the partially engaged state, to the fully engaged state.

The engaged state of the C/T (namely, the axial position of the friction plate) may be mechanically adjusted based on the operation amount of the CP by using a link mechanism or the like for mechanically coupling the clutch pedal CP and the C/T (friction plate), or may be adjusted electrically (by means of the so-called by-wire method) by using a drive force of an actuator which operates based on a detection result by a sensor (sensor S1 described later) for detecting the operation amount of the CP.

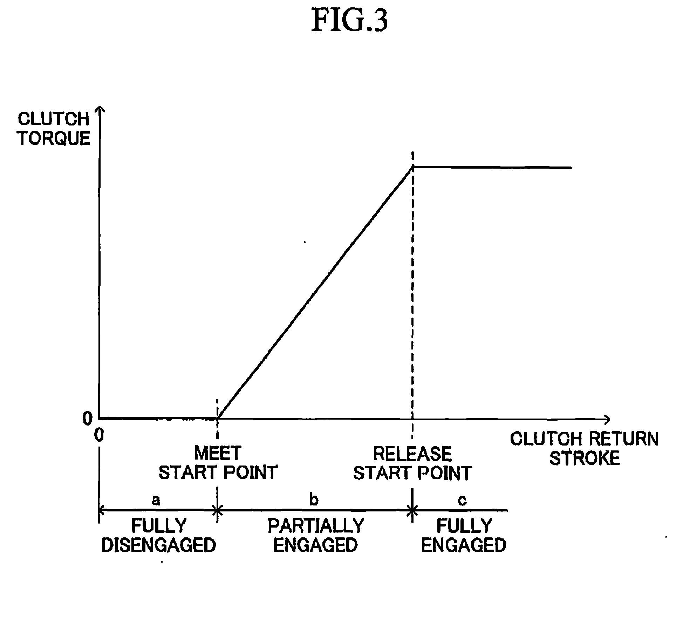

FIG. 3 illustrates an example of "a characteristic of a clutch torque with respect to a clutch return stroke". The clutch torque is the maximum value of a torque which the C/T can transmit. The clutch torque characteristic illustrated in FIG. 3 is defined by using a meet start point and a release start point. The meet start point is a clutch return stroke corresponding to a timing at which the C/T transitions from the fully disengaged state to the partially engaged state, and the release start point is a clutch return stroke corresponding to a timing at which the C/T transitions from the fully engaged state to the partially engaged state.

According to a standard characteristic of the clutch torque illustrated In FIG. 3, in a range of the clutch return stroke from "0" to the "meet start point" (namely, a range corresponding to the fully disengaged state of the C/T; refer to "range a" of FIG. 3), the clutch torque maintains "0", in a range of the clutch return stroke larger than the "release start point" (namely, a range corresponding to the fully engaged state of the C/T; refer to "range c" of FIG. 3), the clutch torque maintains the "maximum value", and, in a range of the clutch return stroke between the "meet start point" and the "release start point" (namely , a range corresponding to the partially engaged state of the C/T; refer to "range b" of FIG. 3), as the clutch return stroke transitions from the "meet start point" to the "release start point", the clutch torque increases from "0" toward the "maximum value".

The motor/generator M/G has one of known structures (such as AC synchronous motor), and, for example, a rotor (not shown) is configured so as to integrally rotate with the output shaft of the M/G. An output shaft of the M/G is connected so as to be able to transmit a power via a known gear train or the like to the input shaft of the M/T. In the following section, a torque of the output shaft of the E/G is referred to as "EG torque", and a torque of the output shaft of the M/G is referred to as "MG torque".

This device includes the clutch operation amount sensor S1 for detecting the clutch return stroke of the clutch pedal CP. the shift position sensor S2 for detecting the position of the shift lever SL, an accelerator operation amount sensor S3 for detecting an operation amount of an accelerator pedal AP (accelerator opening), a brake operation amount sensor S4 for detecting an operation amount of a brake pedal BP (such as depressing force and presence/absence of operation), a wheel speed sensor S5 for detecting a speed of a wheel, and a rotation speed sensor S6 for detecting a rotation speed Ni of the input shaft of the M/T.

Further, this device includes an electronic control unit ECU. The ECU, based on information from the sensors S1 to S6 and other sensors and the like, and other such information, controls a fuel injection amount (opening of a throttle valve) of the EIG, thereby controlling the EG torque, and controls an inverter (not shown), thereby controlling the MG torque.

Specifically, a ratio between the EG torque and the MG torque is adjusted based on the information from the sensors S1 to S6 and other sensors and the like, and other such information. The magnitudes of the EG torque and the MG torque are respectively adjusted mainly based on the accelerator opening acquired from the sensor S3.

### (Adjustment of "shift impulse" by MG torque during gear change)

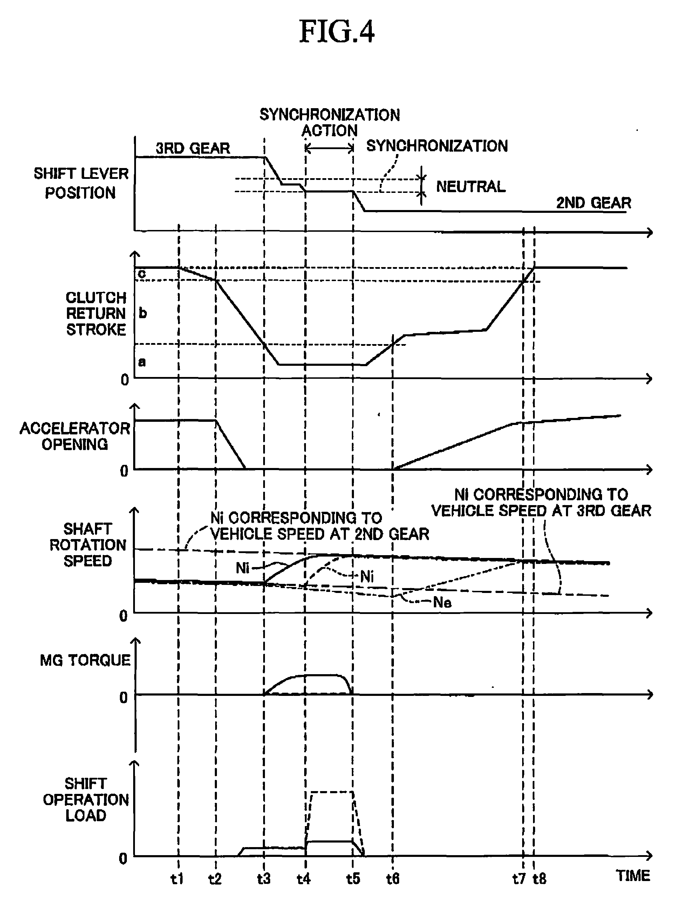

As described above, in this device, the output shaft of the M/G is connected to the Input shaft of the M/T. In this configuration, the substantial rotational moment of inertia of the input shaft of the M/T increases by an amount corresponding to the rotational moment of inertia of the output shaft of the M/G. As a result, there is a concern that the "shift impulse" during the synchronization action increases, resulting in deterioration of a shift feeling. Referring to FIG. 4, a description is given of this deterioration. In FIG. 4, "Ni" denotes the rotation speed of the input shaft of the M/T. and "Ne" denotes the rotation speed of the output shaft of the E/G. Moreover, "Ni corresponding to vehicle speed at second gear" is a rotation speed of the input shaft of the M/T acquired from a speed reduction ratio of the M/T corresponding to the "second gear" and the vehicle speed, and "Ni corresponding to vehicle speed at third gear" is a rotation speed of the input shaft of the M/T acquired from a speed reduction ratio of the M/T corresponding to the "third gear" and the vehicle speed.

In the example illustrated in FIG. 4, it is assumed that, before the time t1, the vehicle is traveling by using only the EG torque at the third gear (EG torque>0, MG torque=0). After the time t1, as a result of a shift down operation (gear change operation) from the third gear to the second gear, as illustrated in FIG. 4, the acceleration pedal AP, the clutch pedal CP, and the shift lever SL are operated in conjunction with one another.

Particularly focusing on the operations of the clutch pedal CP and the shift lever SL, in this example, the clutch pedal CP is operated from the time t1 to the time t8. Particularly, from the time t3 to the time t6, the clutch return stroke is maintained in the "range a", and the C/T is thus maintained in the fully disengaged state.

In this way, while the C/T is maintained in the fully disengaged state, the shift lever SL is operated to cany out the shift down from the third gear to the second gear. Specifically, after the time t3, the position in the shift operation direction (vertical direction in FIG. 2) of the shift lever SL transitions from the "meshing area" of the third gear to the "neutral area", and then via the "synchronization action" from the time t4 to the time t5 (via the "push-apart area"), transitions to the "meshing area" of the second gear.

A description is now given of, first, as a preparation for a description of actions/effects of this device, a case where the "shift impulse" is not adjusted by the MG torque during the gear change, namely, a case where, as represented by the broken line, the MG torque maintains "0". In this case, Ni starts increasing from the time t4, which is a start time point of the synchronization action, toward "Ni corresponding to vehicle speed at second gear", and reaches "Ni corresponding to vehicle speed at second gear" at the time t5, which is an end time point of the synchronization action.

On this occasion, the substantial rotational moment of inertia of the input shaft of the M/T has increased by an amount corresponding to the rotational moment of inertia of the output shaft of the M/G. Thus, the operation force of (shift operation load on) the shift lever SL which is required for increasing Ni during the synchronization action increases. As a result, as represented by the broken line, the shift operation load during the synchronization action (t4 to t5) changes around a relatively large value. In other words, the "shift impulse" during the synchronization action becomes relatively large, resulting in a failure in providing a satisfactory shift feeling.

In contrast, in this device, based on the determination from the operation of the clutch pedal CP that the C/T is in the fully disengaged state, and on the determination from the operation of the shift lever SL that the gear change operation is being carried out by the driver, the "shift impulse" is adjusted by the MG torque during the gear change.

In the example illustrated in FIG. 4, the MG torque (>0), as represented by the solid line, is generated in a direction for increasing Ni from the time t3 to the time t5. As a result, the input shaft of the M/T is rotationally driven by the MG torque in a direction for increasing Ni. Note that, "direction for increasing Ni" can be paraphrased as a direction for reducing the difference (hereinafter, referred to as "rotation speed difference") between Ni and "Ni corresponding to vehicle speed at second gear".

in this way, as a result of the input shaft of the M/T rotationally driven by the MG torque, as represented by the solid line, Ni starts increasing at the time t3 before the time t4, which is the start time point of the synchronization action, toward "Ni corresponding to vehicle speed at second gear", and reaches "Ni corresponding to vehicle speed at second gear" before time t5, which is the end time point of the synchronization action. In addition, the shift operation load required for increasing Ni during the synchronization action is reduced by the assistance of the MG torque. As a result, as represented by the solid line, the shift operation load during the synchronization action (t4 to t5) changes around a relatively small value. In other words, the "shift impulse" during the synchronization action is appropriately adjusted, resulting in a satisfactory shift feeling.

Note that, in a case where the shift operation load is reduced by the assistance of the MG torque, as described above, the MG torque needs to be generated in the "direction for reducing rotation speed difference". On this occasion, the "direction for reducing rotation speed difference" is the "direction for increasing Ni" in the case of shift down as in the example illustrated in FIG. 4, and is the "direction for reducing Ni" in the case of shift up.

Thus, in order to determine the direction to generate the MG torque, it is necessary to determine whether the "direction for reducing rotation speed difference" is the "direction for increasing Ni" (shift down) or the "direction for reducing Ni" (shift up). On this occasion, after the synchronization action starts, such as after the time t4 in FIG. 4, this determination can be easily made by monitoring the change in Ni. Specifically, if Ni is increased by the synchronization action, it may be determined that the "direction for reducing rotation speed difference" is the "direction for increasing Ni" (namely, the shift down action), and if Ni is decreased by the synchronization action, it may be determined that the "direction for reducing rotation speed difference" is the "direction for reducing Ni" (namely, the shift up action).

In contrast, as in the example illustrated in FIG. 4, in a case where the MG torque is generated before the start of the synchronization action, it is necessary to determine, at a time point before the start of the synchronization action, whether the current gear change action is the shift up action or the shift down action. This determination is made based on, for example, a change in accelerator opening, a change in vehicle speed, an operation of the brake pedal BP, and the like before the start of the gear change action.

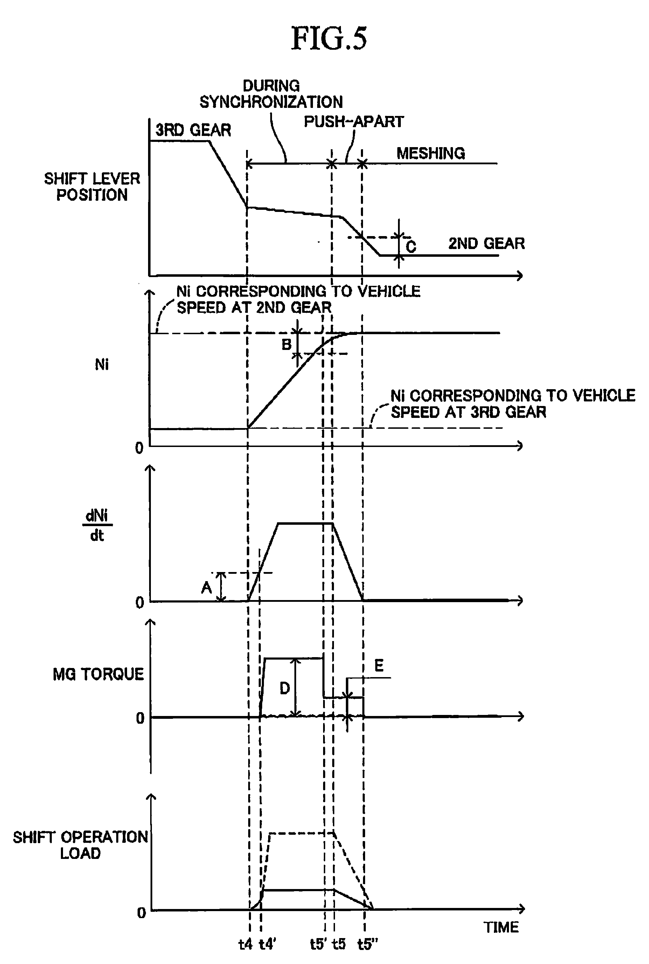

FIG. 5 is another example of the adjustment of the shift impulse by the assistance by the MG torque. In the example Illustrated in FIG. 5, as in the example illustrated in FIG. 4, a case where the shift down action from the third gear to the second gear is illustrated. The "synchronization action" is carried out from the time t4 to the time t5, and, after the time t5, the "push-apart action" is carried out.

In the example illustrated in FIG. 5, a difference from the example illustrated in FIG. 4 is that, before the "synchronization action" (before the time t4), the shift impulse is not adjusted by the MG torque. Thus, Ni starts increasing, from the time point t4, which is the start time point of the synchronization action, toward "Ni corresponding to vehicle speed at second gear". In the example illustrated in FIG. 5, as represented by the solid line, during the synchronization action and the push-apart action, the shift impulse is adjusted by the MG torque.

During the synchronization action, an MG torque of a magnitude D is generated in the "direction for reducing rotation speed difference" (specifically, in the direction for increasing Ni), and, during the push-apart action, an MG torque of a magnitude E is generated in the "direction for reducing rotation speed difference". The magnitudes D and E are described later. Consequently, as represented by the solid line, the "shift impulse" during the synchronization action and the push-apart action is appropriately reduced/adjusted, resulting in a satisfactory shift feeling.

An additional description is now given of the adjustment of the MG torque during the synchronization action. In the example illustrated in FIG. 5, the adjustment of the MG torque during the synchronization action is started based on a condition that the time derivative dNi/dt of Ni exceeds a predetermined value A (time t4') and is finished based on a condition that the "rotation speed difference" decreases to a value equal to or less than a predetermined value B (time t5'). Moreover, the adjustment of the MG torque during the synchronization action may be started based on a condition that the operation stroke of the shift lever SL (or the position of SL) exceeds a predetermined value (predetermined position) corresponding to the start of the synchronization action. Similarly, the adjustment of the MG torque during the synchronization action may be finished based on a condition that the operation stroke of the shift lever SL (or the position of SL) exceeds a predetermined value (predetermined position) corresponding to the end of the synchronization action. Note that, "operation stroke of SL" and "position of SL" respectively refer to an operation stroke SL and a position of the SL in the shift operation direction (lengthwise direction of the vehicle) on the shift pattern.

The magnitude D of the MG torque to be adjusted during the synchronization action can be increased as the "rotation speed difference" (at the beginning of the synchronization action) increases. This is based on a fact that the shift impulse during the synchronization action increases as the "rotation speed difference" at the beginning of the synchronization action increases. As a result, regardless of the amplitude of the "rotation speed difference" at the beginning of the synchronization action, the "shift impulse" Is stably and appropriately adjusted, resulting In a stable and satisfactory shift feeling.

Moreover, the magnitude D of the MG torque to be adjusted during the synchronization action can be reduced as the accelerator opening (particularly, the accelerator opening before the start of the gear change action) increases. As a result, in a case where the accelerator opening is large before the start of the gear change action, the "shift impulse" increases, and a sporty operation feeling can be provided for the driver.

Moreover, the magnitude D of the MG torque to be adjusted during the synchronization action can be increased as the vehicle speed increases. This is based on a fact that the "rotation speed difference" increases as the vehicle speed increases, resulting in an increase in "shift impulse". As a result, regardless of the vehicle speed, the "shift impulse" can be adjusted to be approximately constant, resulting in a stable and satisfactory shift feeling.

Moreover, the magnitude D of the MG torque to be adjusted during the synchronization action can be increased as the operation speed (travel speed) of the shift lever SL increases. As a result, the "shift impulse" can be reduced as the operation speed of the shift lever SL increases, resulting In a comfortable shift feeling when the operation speed of the shift lever SL is large.

Moreover, the magnitude D of the MG torque to be adjusted during the synchronization action can be increased as the "gear position difference" between before and after the gear change increases. On this occasion, for example, the "gear position difference" is "1" for a case of changing from third gear to second gear and a case of changing from second gear to third gear, "2" for a case of changing from fourth gear to second gear and a case of changing from second gear to fourth gear, "3" for a case of changing from fifth gear to second gear and a case of changing from second gear to fifth gear. A shift operation having a "gear position difference" equal to or more than "2" is also referred to as "skip shift". This processing is based on a fact that the "rotation speed difference" increases as the "gear position difference" increases, resulting in an increase In "shift impulse". As a result, regardless of the "gear position difference", the "shift impulse" can be adjusted to be approximately constant, resulting in a stable and satisfactory shift feeling even during the skip shift. Note that, as the "shift position difference" Increases, an upper limit of the MG torque may be set to a larger value. In this case, by adjusting the magnitude of the MG torque so as not to exceed the upper limit, the magnitude D of the MG torque can be increased as the "shift position difference" increases.

Moreover, the magnitude D of the MG torque to be adjusted during the synchronization action can be made smaller in a case where the "rotation speed corresponding to vehicle-speed-after-gear-change" exceeds the permissible maximum value of the rotation speed of the output shaft of the E/G (so called over-rev) than in other cases. As a result, in case of a possible over-rev, with an increase in "shift impulse", the driver may be notified of the "possible over-rev after transition to the engaged state of the C/T". As a result, a failure of components inside the E/G caused by the over-rev can be prevented from occurring. Note that, during the over-rev, the MG torque may be adjusted so as to be generated in a "direction for increasing rotation speed difference" (specifically, in a direction for reducing Ni). Alternatively, when the over-rev occurs, the MG torque may be adjusted so that "rotation speed difference" maintains a predetermined value larger than zero. As a result, the same actions/effects as in the above-mentioned description can be obtained.

Further, the magnitude D of the MG torque to be adjusted during the synchronization action can be adjusted by a combination of at least two of the above-mentioned various adjustment methods. A description has been given of the adjustment of the MG torque during the synchronization action.

An additional description is now given of the adjustment of the MG torque during the push-apart action. In the example illustrated in FIG. 5, the adjustment of the MG torque during the push-apart action starts simultaneously with the end of the adjustment of the MG torque during the synchronization action (time t5'), and ends based on a condition that the position of the shift lever SL in the shift operation direction (vertical direction in FIG. 2) passes a predetermined position C corresponding to a start of the meshing state of the second gear (time t5").

The adjustment of the MG torque during the push-apart action may be started at a time point after a predetermined short period from the end (time t5') of the adjustment of the MG torque during the synchronization action. Moreover, the adjustment of the MG torque during the push-apart action may be finished after a predetermined period from the start of the adjustment. Moreover, in a case where the adjustment of the MG torque during the push-apart action finishes after the predetermine period has elapsed from the start thereof, the magnitude E of the MG torque can be increased as an oil temperature inside the M/T decreases. This is based on a fact that the rotation speed of the input shaft of the M/T is less likely to change as the oil temperature inside the M/T decreases. As a result, regardless of the oil temperature inside the M/T, the end period of the adjustment of the MG torque during the push-apart action can be brought close to "a period during which the position of the shift lever SL in the shift operation direction (vertical direction in FIG. 2) moves from the "push-apart area" to the "meshing area"".

Moreover, feedback control may be applied to the magnitude E of the MG torque to be adjusted during the push-apart action so that the "rotation speed difference" maintains zero. The "rotation speed difference" can be sequentially monitored by sequentially acquiring the value of Ni, which is acquired from the rotation speed sensor S6 for detecting the rotation speed Ni of the input shaft of the M/T. and the "rotation speed corresponding to vehicle-speed-after-gear-change", which is acquired from the vehicle speed acquired from the vehicle wheel speed sensor S5 and the speed reduction ratio (known) of the M/T corresponding to the gear position (second gear in the example illustrated in FIG. 5) after the gear change.

The present invention is not limited to the above-mentioned embodiment, and various variations can be employed within the scope of the present invention. For example, In the examples Illustrated in FIGS. 4 and 5, the cases of the shift down actions are illustrated, but it should be understood that the present invention can be also applied to a shift up action. Moreover, in the examples illustrated in FIGS. 4 and 5, the case where the vehicle travels by using only the EG torque (EG torque>0 and MG torque=0) is assumed, but the present invention can be also applied to a case where the vehicle travels by using both the EG torque and the MG torque (EG torque>0 and MG torque>0).

## Claims

1. A power transmission control device for a vehicle, which is to be applied to a vehicle comprising an internal combustion engine and an electric motor as power sources, the power transmission control device comprising:
a transmission including an input shaft to which a power is input from an output shaft of the internal combustion engine, and an output shaft for outputting a power to a drive wheel of the vehicle, wherein one of a plurality of gear positions is selected based on a shift position of a shift operation member operated by a driver, the electric motor having an output shaft connected to the input shaft of the transmission;
a friction clutch interposed between the output shaft of the internal combustion engine and the input shaft of the transmission for selectively realizing an engaged state, which is a state in which the power is transmitted, and a disengaged state, which is a state in which the power is not transmitted, based on an operation on a clutch operation member operated by the driver;
first detection means for detecting the operation on the clutch operation member;
second detection means for detecting the operation on the shift operation member; and
control means for controlling an internal-combustion-engine torque, which is a drive torque of the output shaft of the internal combustion engine, and an electric-motor torque, which is a drive torque of the output shaft of the electric motor,
wherein the control means includes adjustment means for adjusting, based on determination from the detected operation on the clutch operation member that the friction clutch is in the disengaged state, and on determination from the detected operation on the shift operation member that the driver is carrying out a gear change operation, the electric-motor torque in order to rotationally drive the input shaft of the transmission.

2. A power transmission control device for a vehicle according to claim 1, wherein the adjustment means is configured to adjust the electric-motor torque during a synchronization action which is an action for reducing, to zero, a rotation speed difference, which is a difference between a rotation speed corresponding to vehicle-speed-after-gear-change and a rotation speed of the input shaft of the transmission, the rotation speed corresponding to vehicle-spead-after-goar-change being a rotation speed of the input shaft of the transmission, which is acquired from a speed reduction ratio of the transmission corresponding to a gear position after a gear change by the gear change operation and a speed of the vehicle.

3. A power transmission control device for a vehicle according to claim 2, wherein the adjustment means is configured to start, based on a condition that a time derivative of the rotation speed of the input shaft of the transmission exceeds a predetermined value, the adjustment of the electric-motor torque during the synchronization action.

4. A power transmission control device for a vehicle according to claim 2, wherein the adjustment means is configured to start, based on a condition that an operation stroke of the shift operation member caused by the gear change operation exceeds a predetermined value corresponding to a start of the synchronization action, the adjustment of the electric-motor torque during the synchronization action.

5. A power transmission control device for a vehicle according to any one of claims 2 to 4, wherein the adjustment means is configured to finish, based on a condition that the rotation speed difference becomes a predetermined value or smaller, the adjustment of the electric-motor torque during the synchronization action.

6. A power transmission control device for a vehicle according to any one of claims 2 to 4, wherein the adjustment means is configured to finish, based on a condition that an operation stroke of the shift operation member caused by the gear change operation exceeds a predetermined value corresponding to an end of the synchronization action, the adjustment of the electric-motor torque during the synchronization action.

7. A power transmission control device for a vehicle according to any one of claims 2 to 6, wherein the adjustment means is configured to adjust the electric-motor torque during the synchronization action so that the electric-motor torque is generated in a direction for reducing the rotation speed difference, and so that a magnitude of the electric-motor torque increases as the rotation speed difference increases.

8. A power transmission control device for a vehicle according to any one of claims 2 to 6, wherein the adjustment means is configured to adjust the electric-motor torque during the synchronization action so that the electric-motor torque is generated in a direction for reducing the rotation speed difference, and so that a magnitude of the electric-motor torque decreases as an amount of an operation on an acceleration operation member, which is operated by the driver for accelerating the vehicle, increases.

9. A power transmission control device for a vehicle according to any one of claims 2 to 6, wherein the adjustment means is configured to adjust the electric-motor torque during the synchronization action so that the electric-motor torque is generated in a direction for reducing the rotation speed difference, and so that a magnitude of the electric-motor torque increases as the speed of the vehicle increases.

10. A power transmission control device for a vehicle according to any one of claims 2 to 6, wherein the adjustment means is configured to adjust the etectric-motor torque during the synchronization action so that the electric-motor torque is generated in a direction for reducing the rotation speed difference, and so that a magnitude of the electnc-motor torque increases as an operation speed of the shift operation member increases.

11. A power transmission control device for a vehicle according to any one of claims 2 to 6, wherein the adjustment means is configured to adjust the electric-motor torque during the synchronization action so that the electric-motor torque is generated in a direction for reducing the rotation speed difference, and so that a magnitude of the electric-motor torque increases as a gear position difference between gear positions before and after the gear change in the gear change operation increases.

12. A power transmission control device for a vehicle according to claim 11, wherein the adjustment means is configured to adjust the electric-motor torque during the synchronization action so that the magnitude of the electric-motor torque increases as the gear position difference increases, by setting an upper limit of the electronic motor torque to a larger value as the gear position difference increases, and by adjusting the magnitude of the electric-motor torque so as not to exceed the upper limit.

13. A power transmission control device for a vehicle according to any one of claims 2 to 6, wherein the adjustment means is configured to adjust the electric-motor torque during the synchronization action so that the electric-motor torque is generated in a direction for reducing the rotation speed difference, and, in a case where the rotation speed corresponding to vehicle-speed-after-gear-change exceeds a permissible maximum value of a rotation speed of the output shaft of the internal combustion engine, the magnitude of the electric-motor torque is smaller than a case where the rotation speed corresponding to vehicle-speed-after-gear-change does not exceed the permissible maximum value.

14. A power transmission control device for a vehicle according to any one of claims 2 to 6, wherein the adjustment means is configured to adjust the electric-motor torque so that the electric-motor torque is generated in a direction for reducing the rotation speed difference, and, when the rotation speed corresponding to vehiole-speed-after-gear-change exceeds a permissible maximum value of a rotation speed of the output shaft of the internal combustion engine, the electric-motor torque is generated in a direction for increasing the rotation speed difference in place of the direction for reducing the rotation speed difference.

15. A power transmission control device for a vehicle according to any one of claims 2 to 6, wherein the adjustment means is configured to adjust the electric-motor torque so that the electric-motor torque is generated in a direction for reducing the rotation speed difference, and, when the rotation speed corresponding to vehicle-speed-after-gear-change exceeds a permissible maximum value of a rotation speed of the output shaft of the internal combustion engine, the rotation speed difference maintains a predetermined value larger than zero.

16. A power transmission control device for a vehicle according to any one of claims 2 to 15, wherein the adjustment means is configured to adjust the electric-motor torque while an push-apart action is being carried out, the push-apart action being an action from an end of the synchronization action to an establishment of a meshing state in which the gear position after the gear change by the gear change operation is realized in the transmission.

17. A power transmission control device for a vehicle according to claim 16, wherein the adjustment means is configured to adjust the electric-motor torque during the push-apart action based on a condition that a position of the shift operation member passes a predetermined position corresponding to a start of the meshing state.

18. A power transmission control device for a vehicle according to claim 16 or 17, wherein the adjustment means is configured to apply feedback control to the electric-motor torque during the push-apart action so that the rotation speed difference maintains zero.
